(19)

Europäisches Patentamt
European Patent Office
Office européen des brevets

(11) **EP 3 581 974 A1**

(12) **EUROPEAN PATENT APPLICATION**
published in accordance with Art. 153(4) EPC

(43) Date of publication:
**18.12.2019 Bulletin 2019/51**

(51) Int Cl.:
*G02B 5/02* (2006.01)  *G02B 1/04* (2006.01)

(21) Application number: **18751592.9**

(22) Date of filing: **19.01.2018**

(86) International application number:
**PCT/JP2018/001497**

(87) International publication number:
**WO 2018/147042 (16.08.2018 Gazette 2018/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **07.02.2017 JP 2017020266**

(71) Applicant: **Mitsui Mining & Smelting Co., Ltd.**
**Shinagawa-ku**
**Tokyo 141-8584 (JP)**

(72) Inventors:
• **YONEDA, Yoshihiro**
  **Ageo-shi**
  **Saitama 362-0021 (JP)**
• **KATO, Kazuhiko**
  **Ageo-shi**
  **Saitama 362-0021 (JP)**

(74) Representative: **Novagraaf Technologies**
**Bâtiment O2**
**2, rue Sarah Bernhardt**
**CS90017**
**92665 Asnières-sur-Seine Cedex (FR)**

(54) **LIGHT SCATTERING SHEET**

(57) A light-diffusing sheet (light diffuser) includes a molded resin and light-scattering particles dispersed in the molded resin. The light-scattering particles are rare earth phosphate particles. The light-scattering particles present per unit volume of the molded resin have a surface area of 0.600 $m^2/cm^3$ or less. The light-scattering particles preferably have a volume cumulative particle size $D_{50}$ at 50% in the volume-based cumulative particle size distribution of 0.1 to 20 $\mu m$ as measured by the laser diffraction method. The light-scattering particles preferably have a $D_{99}/D_{50}$ value of 10 or less, wherein $D_{99}$ is the volume cumulative particle size at 99% in the volume-based cumulative particle size distribution as measured by the laser diffraction method.

EP 3 581 974 A1

## Description

### Technical Field

The present invention relates to a light-diffusing sheet.

### Background Art

A light-diffusing sheet having inorganic particles incorporated in a transparent resin matrix is used in various optical devices, such as LCD backlight modules, screens of image displays (e.g., rear-projection screens), and lighting fittings. A light-diffusing sheet in these applications is required to have excellent light diffusing properties while securing transparency.

Conventional techniques relevant to light-diffusing sheets are exemplified by the one disclosed in patent literature 1 below, which teaches obtaining a light-diffusing film by applying a composition comprising 100 parts by mass of a binder resin, 10 to 500 parts by mass of a light-scattering material, and 30 to 500 parts by mass of an organic solvent and having a volume resistivity of $1 \times 10^{13}$ $\Omega$cm or lower. Examples of inorganic substances that are used as the light-scattering material in patent literature 1 include silica, zirconia, calcium carbonate, barium sulfate, and titanium oxide. The light-diffusing film is described as generating no electrostatic spots and exhibiting improved luminance characteristics and improved luminance uniformity.

Citation List

Patent Literature

Patent literature 1: US 2004/0238801A1

### Summary of Invention

The transparent screen used in LCD backlight modules, image displays, such as a rear-projection TV, or head-up displays is required to have high light-diffusing properties with a view to provide high image quality. However, the light-diffusing film of patent literature 1 does not achieve satisfactory light-diffusion performance.

An object of the present invention is to provide an improvement on a light-diffusing sheet, particularly to provide a light-diffusing sheet having high light-diffusing properties.

The present invention provides a light-diffusing sheet comprising a molded resin and light-scattering particles dispersed in the molded resin. The light-scattering particles are rare earth phosphate particles. The light-scattering particles present per unit volume of the molded resin have a surface area of 0.600 $m^2/cm^3$ or less.

### Description of Embodiments

The present invention will be described on the basis of certain preferred embodiments. The present invention relates to a light diffuser which includes a light-diffusing sheet comprising a molded resin and light-scattering particles dispersed in the molded resin. The shape of the molded resin may be, but not limited to, a sheet. The term "sheet" is used herein in its broad sense to designate an article including a plate, a sheet, and a film. The light diffuser may be a part of an article. For example, in the case where an article is composed of a transparent molded resin containing no light-scattering particles and a light-diffusing layer comprising a resin and light-scattering particles which is provided on the surface of the transparent molded resin, the light-diffusing layer is an embodiment of the light diffuser of the present invention. The light-diffusing layer may be provided as the surface layer of an article and/or inside the article. For example, the light-diffusing layer as an embodiment of the light diffuser may be provided between a first transparent molded resin and a second transparent molded resin. The light diffuser may have a three-dimensional shape, e.g., of a lens. The light diffuser comprising a molded resin of various shapes, such as the shape of a sheet, comprises a resin composition containing a resin and light-scattering particles. The resin composition may further contain a component(s) other than the resin and light-scattering particles.

The light-scattering particles are disposed inside a molded resin, such as a resin sheet, to cause light diffusion. Specifically, the light-scattering particles are uniformly dispersed in a molded resin, such as a resin sheet or in a coating layer, which is another form of a molded resin, provided on the surface of a substrate, thereby to scatter light incident on the sheet or coating layer. Incident light can generally be scattered forward (forward scatter) and backward (back scatter). With respect to the direction of scatter, the light-scattering particles are used to cause either one or both of forward scatter and back scatter. In what follows, the term "scatter" or "scattering" is intended to include both forward scatter and back scatter, and the term "light" refers to light containing rays of the visible wavelength region.

The resin that can be used to make the light diffuser, such as a light-diffusing sheet, preferably has high transparency. It is also preferred for the resin for use in the present invention to be colorless. It is more preferred for the resin for use in the present invention to be transparent and colorless. The resin to be used in the present invention is not particularly limited as long as it is transparent and colorless and may be either thermoplastic or thermosetting. A thermoplastic resin is preferred in view of ease of molding into sheet or film form.

In using a thermoplastic resin as the resin used in the present invention, any known thermoplastic resins may be used without particular limitation. Examples of useful thermoplastic resins include olefin homopolymers, such as polyethylene and polypropylene; olefin copolymers of ethylene or propylene with other $\alpha$-olefins; polyesters, such as polyethylene terephthalate and polybutylene terephthalate; homo- and copolymers of acrylic acid-based monomers, such as acrylic acid, acrylic esters, methacrylic acid, and methacrylic esters; homo- and copolymers of vinyl monomers, such as styrene; homo- and copolymers of chlorine-containing monomers, such as vinyl chloride and vinylidene chloride; polycarbonates; and cellulose resins, such as triacetyl cellulose. These thermoplastic resins may be used either individually or in combination of two or more thereof.

The light-scattering particles that can be used in combination with the resin comprise particles of a rare earth phosphate. Rare earth phosphate particles can be loaded into the resin to a high loading density while retaining light transmitting properties as compared with zirconia particles or titania particles conventionally known as light-scattering particles. Therefore, the light diffuser of the present invention is able to contain an increased amount of light-scattering particles as compared with the conventional light-diffusing sheets (light diffusers) and thereby achieves improved light diffusing properties.

As used herein, the term "phosphate" refers to an orthophosphate. While an orthophosphate includes a normal salt, a hydrogenphosphate, and a dihydrogenphosphate, the rare earth phosphate used in the present invention is a normal salt of orthophosphoric acid. A rare earth phosphate is represented by $LnPO_4$, wherein Ln represents at least one element selected from the group consisting of Sc, Y, La, Ce, Pr, Nd, Sm, Eu, Gd, Tb, Dy, Ho, Er, Yb, and Lu. Among them preferred is at least one of Y, La, Gd, Yb, and Lu in view of particularly high refractive indices of their phosphate. In the following description the term "light-scattering particles" indicates powder as an aggregate of rare earth phosphate particles or individual rare earth phosphate particles constituting the powder, which depends on the context.

The light-diffusing sheet (light diffuser) of the present invention may contain one rare earth phosphate or a combination of two or more rare earth phosphates. The rare earth phosphate used in the present invention may be either crystalline or amorphous. In using a crystalline rare earth phosphate, it is preferably tetragonal or monoclinic in view of an advantage in terms of optical characteristics.

The light-scattering particles comprising rare earth phosphate particles may be dispersed in the light-diffusing sheet (light diffuser) of the present invention in the form of primary particles or secondary particles, i.e., agglomerates of primary particles. The term "primary particle" refers to an object that is regarded as the smallest unit of powder as judged from its apparent geometric form. The dispersed state of the light-scattering particles in the light-diffusing sheet (light diffuser) of the present invention may be chosen as appropriate according to the intended use of the light-diffusing sheet (light diffuser). For example, the light-scattering particles may be dispersed throughout the light-diffusing sheet (light diffuser) of the present invention.

The amount of the light-scattering particles in the light-diffusing sheet (light diffuser) of the present invention is preferably 0.01 to 30 mass%, more preferably 0.01 to 10 mass%, even more preferably 0.01 to 3 mass%, relative to the light-diffusing sheet (light diffuser). When the amount of the light-scattering particles is within that range, the light-diffusing sheet (light diffuser) shows effectively enhanced light diffusing properties. The amount of the resin in the light-diffusing sheet (light diffuser) of the present invention is preferably 70 to 99.99 mass%, more preferably 90 to 99.99 mass%, even more preferably 97 to 99.99 mass%. When the amount of the resin is within that range, the light-diffusing sheet (light diffuser) exhibits effectively improved transparency, shape retention, and handling properties.

It is preferable that the light-scattering particles present in the light-diffusing sheet (light diffuser) of the present invention to have its surface area controlled so as to enhance the light diffusing properties. As a result of study, the inventors found that a specific relationship between the total surface area of the individual light-scattering particles present in the light-diffusing sheet (light diffuser) of the present invention and the unit volume of the molded resin in which the light-scattering particles are dispersed favors the improvement on light diffusing properties. Specifically, it is preferred for the individual light-scattering particles present per unit volume of the molded resin to have a surface area (i.e. a total surface area of the individual light-scattering particles) of 0.600 $m^2/cm^3$ or less, more preferably 0.500 $m^2/cm^3$ or less, even more preferably 0.150 $m^2/cm^3$ or less. It is also preferred for the individual light-scattering particles present per unit volume of the molded resin to have a surface area of 0.001 $m^2/cm^3$ or more, more preferably 0.01 $m^2/cm^3$ or more, even more preferably 0.015 $m^2/cm^3$ or more. More specifically, the surface area of the light-scattering particles per unit volume of the molded resin is preferably 0.001 to 0.600 $m^2/cm^3$, more preferably 0.01 to 0.500 $m^2/cm^3$, even more preferably 0.015 to 0.150 $m^2/cm^3$. In what follows, the surface area of the light-scattering particles per unit volume of the molded resin will simply be referred to as the surface area per unit volume for the sake of convenience.

With the surface area per unit volume being in the above range, the light-diffusing sheet (light diffuser) of the present invention achieves improved light diffusing performance. The inventors' study has also revealed that specifying the surface area per unit volume within the above range produces an additional effect in preventing coloration, particularly yellowing of the light diffusing sheet (light diffuser). In detail, although use of the rare earth phosphate particles as light-scattering particles brings about improvement on light diffusing properties of the light diffusing sheet (light diffuser) as compared with use of other inorganic substances, cases are sometimes met with in which the resin may be decomposed to yellow the light-diffusing sheet (light diffuser) on account of the high surface activity of the rare earth phosphate particles, which depends on the type of the resin and the particle size and specific surface area of the light-scattering particles. The inventors have figured out that this yellowing phenomenon, which has been found out by the inventors for the first time, can be prevented effectively by specifying the surface area per unit volume in the above range.

The surface area per unit volume may be determined by methods A and B below.

Method A:

Prior to producing a light-diffusing sheet (light diffuser) by incorporating the light-scattering particles into the resin, the specific surface area of the particles is determined, and the surface area ($m^2$) of the light-scattering particles is calculated beforehand from the determined specific surface area and the mass of the particles to be incorporated into the resin. Afterward, the resin is loaded with the light-scattering particles of the known mass and molded, and the volume ($cm^3$) of the obtained molded resin is measured. The surface area per unit volume is calculated by dividing the surface area ($m^2$) by the volume ($cm^3$) of the molded resin article.

Method B:

The surface area per unit volume of the light-scattering particles in a light-diffusing sheet (light diffuser) can be obtained as follows. The molded resin having the light-scattering particles dispersed therein is cut, and the cut surface is observed microscopically. The particle size of any number of (e.g., 30) light-scattering particles is measured, and the measured particle sizes are arithmetically averaged. The light-scattering particle being assumed as a sphere, the mass and surface area of a single light-scattering particle are calculated from the density of the rare earth phosphate and the above calculated average particle size. Separately, the volume ($cm^3$) of the molded resin is measured. Afterward, the resin component of the light-diffusing sheet (light diffuser) is removed by ashing to take out the light-scattering particles, which were weighed to measure their mass. The surface area ($m^2$) of the light-scattering particles is calculated from their mass and the mass and surface area of the single light-scattering particle. The surface area ($m^2$) is divided by the volume ($cm^3$) gives the surface area per unit volume.

When method A is adopted, the term "specific surface area" of the light-scattering particles means a BET specific surface area. The BET specific surface area can be determined by nitrogen adsorption using, for example, FlowSorb 2300 from Shimadzu Corp. The amount of the sample powder is 0.3 g. Previous degassing is carried out in the atmosphere at 120°C for 10 minutes.

When method B is used, the particle size of the light-scattering particles in the molded resin can be determined using an electron microscope (e.g., a scanning electron microscope (SEM)) or a common optical microscope. The mass of the light-scattering particles can be obtained as the mass of the residue after firing the molded resin at the ashing temperature of the resin, e.g., 1000°C.

In both methods A and B, the volume of the molded resin can be obtained by measuring the thickness, length, and width using a ruler, a caliper, or a micrometer.

With the view of making the light-diffusing sheet (light diffuser) having the above-specified surface area per unit volume, it is advantageous to select light-scattering particles to be incorporated into the resin matrix from those having a specific BET specific surface area or those having a specific particle size. Otherwise, it is also advantageous to adjust the amount of the light-scattering particles to be incorporated into the resin matrix. Which of these manipulations is chosen for achieving the above-specified surface area per unit volume may be decided as appropriate depending on the intended use of the light-diffusing sheet (light diffuser) of the present invention. In particular, the inventors have revealed as a result of their study that incorporating into a resin a relatively large amount of light-scattering particles comprising rare earth phosphate particles with a relatively low BET specific surface area is advantageous with a view to obtaining a light-diffusing sheet (light diffuser) having high light-diffusing properties, high transparency, and reduced yellowing.

From the above viewpoint, the BET specific surface area of the light-scattering particles is preferably 0.1 to 100 $m^2/g$, more preferably 0.1 to 50 $m^2/g$, even more preferably 0.1 to 10 $m^2/g$. Light-scattering particles with such a particle size are preferably obtained by, for example, the method described below.

With regard to the particle size, it is advantageous for the light-scattering particles to have a volume cumulative particle size $D_{50}$ (the particle diameter at 50% in the volume-based cumulative particle size distribution) of 0.1 to 20 $\mu$m.

As a result of the inventors' study, it turned out that, by placing light-scattering particles having a $D_{50}$ in the above range inside a resin matrix to cause light diffusion, the resulting light-diffusing sheet (light diffuser) achieves high degree of light scatter while retaining the transparency of the sheet. With the view of further increasing the degree of light scatter while retaining the transparency of the light-diffusing sheet (light diffuser), the $D_{50}$ of the light-scattering particles is more preferably 0.3 to 20 $\mu$m, even more preferably 0.3 to 10 $\mu$m, still even more preferably 0.3 to 3 $\mu$m. Light-scattering particles with such an average particle size are preferably obtained by, for example, the method described below.

The volume cumulative particle size $D_{50}$ can be determined, for example, as follows. The light-scattering particles are mixed with water and dispersed for 1 minute in a common ultrasonic bath. The determination of the particle count is performed using Backman Coulter Counter LS13 320.

It has been ascertained that light-scattering particles having a sharper particle size distribution exhibit higher light-scattering properties. The particle size distribution of light-scattering particles can be evaluated using as a measure the value $D_{99}/D_{50}$. $D_{99}$ means the volume cumulative particle size at 99% in the volume-based cumulative particle size distribution as measured by the laser diffraction method. As $D_{99}/D_{50}$ approaches 1, the particle size distribution becomes sharper. The value $D_{99}/D_{50}$ in the present invention is preferably 10 or less, more preferably 5 or less, even more preferably 2.5 or less. $D_{99}$ can be determined in the same manner as for $D_{50}$.

The light-scattering particles preferably has an aspect ratio (length to width ratio) of 2 or less, more preferably 1.5 or less, even more preferably 1.3 or less. The light-scattering particles of which the aspect ratio falls in that range succeed in scattering light uniformly to achieve further improved light-scattering properties. The aspect ratio of the particles can be determined by measuring the length and width of 30 individual particles selected on an SEM image, calculating the aspect ratio of the individual particles, and averaging the values arithmetically. As used herein, the term "length" of a particle refers to the length of the longest line segment that traverses a projected image (two-dimensional image) of a particle, and the term "width" of a particle refers to the length of the line segment that intersects the longest transverse line segment at right angles and passes through the midpoint of the longest transverse line segment.

With a view to further enhancing the light diffusing properties, it has been proved advantageous that the light-scattering particles have a pore size distribution that shows one or more peaks in the range of from 0.2 to 10 $\mu$m. With the same view, it is particularly advantageous that the pore size distribution have only one peak in the above range. In order to obtain the light-scattering particles having such a peak in its pore size distribution, it is helpful to use the light-scattering particles comprising the rare earth phosphate particles in the form of agglomerate of primary particles. Agglomeration of primary particles occurs due to intermolecular forces, chemical bonding, bonding with a binder, and the like. In the hereinafter described method for producing rare earth phosphate particles, the primary particles agglomerate through intermolecular forces or chemical bonding.

The pore size distribution and average pore size of the light-scattering particles can be determined using, for example, a mercury porosimeter for pore size distribution analysis (e.g., Auto Pore IV, from Micromeritics).

The individual primary particles of the rare earth phosphate making up the agglomerates preferably have a primary particle size of 20 nm to 20 $\mu$m, more preferably 25 nm to 10 $\mu$m, even more preferably 100 nm to 3 $\mu$m. As used herein, the term "primary particle size" refers to the BET primary particle size.

The (BET) primary particle size can be determined, for example, by nitrogen adsorption using, e.g., FlowSorb 2300 from Shimadzu Corp. The amount of the sample powder is 0.3 g. Previous degassing is carried out in the atmosphere at 120°C for 10 minutes. Assuming the particles as spherical, the primary particle size is calculated from the determined BET specific surface area according to the following formula:

$$d = 6000/(A \cdot \rho)$$

wherein d is a calculated primary particle size (nm); A is a specific surface area (m$^2$/g) measured by single-point BET analysis; and $\rho$ is the density (g/cm$^3$) of the sample under analysis.

It is considered advantageous for the rare earth phosphate primary particles to have high crystallinity with a view to increase the refractive index and thereby to further enhance the light diffusing properties. The crystallinity of the primary particles can be evaluated using as a measure the ratio of crystallite size to BET primary particle size of the rare earth phosphate particles. As the ratio approaches 1, the rare earth phosphate primary particles show higher crystallinity and are nearer to single crystals. In the present invention, the crystallite size/primary particle size is preferably 0.45 or higher, more preferably 0.50 or higher, even more preferably 0.53 or higher.

The crystallite size of the rare earth phosphate particles can be determined as follows. An X-ray diffractometer RINT-TTR III from Rigaku Corp. is used. A sample powder is put in a glass holder and scanned with CuK$\alpha$ rays generated by application of 50 kV-300 mA at an angle increment of 0.02° and a scanning rate of 4.0°/min. The crystallite size is obtained from the results using XRD software JADE.

It is preferred for the light-scattering particles comprising the rare earth phosphate particles to have high whiteness (L*), low redness (a*), and low yellowness (b*) in order to minimize coloration of the molded resin comprising a resin and light-scattering particles. Specifically, the whiteness (L*) is preferably 70 to 100, more preferably 75 to 100, even more preferably 80 to 100. The redness (a*) is preferably 0 to 5.0, more preferably 0 to 3.0, even more preferably 0 to 2.5. The yellowness (b*) is preferably 0 to 10, more preferably 0 to 8.0, even more preferably 0 to 6.0.

The whiteness (L*), redness (a*), and yellowness (b*) can be determined by, for example, directly measuring the chromaticity of the powder using a spectrocolorimeter (e.g., CM-2600d from Konica Minolta, Inc.) in accordance with JIS Z8729 "Color specification according to U*V*W* colorimetric system".

The light-scattering particles comprising the rare earth phosphate particles may be treated to have the surface thereof rendered lipophilic to a degree that does not impair the effects of the present invention with a view to improving the dispersibility in a molded resin. Such a surface treatment is exemplified by a treatment with various coupling agents, such as organometallic compounds. Examples of useful coupling agents include silane, zirconium, titanium, and aluminum coupling agents.

Examples of useful silane coupling agents include vinyltrichlorosilane, vinyltrimethoxysilane, vinyltriethoxysilane, 2-(3,4-epoxycyclohexyl)ethyltrimethoxysilane, 3-glycidoxypropyltrimethoxysilane, 3-glycidoxypropylmethyldiethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, N-2-(aminoethyl)-3-aminopropylmethyldimethoxysilane, N-2-(aminoethyl)-3-aminopropyltrimethoxysilane, N-2-(aminoethyl)3-aminopropyltriethoxysilane, 3-aminopropyltrimethoxysilane, 3-aminotriethoxysilane, 3-triethoxysilyl-N-(1,3-dimethylbutylidene)propylamine, N-phenyl-3-aminopropyltrimethoxysilane, N-(vinylbenzyl)-2-aminoethyl-3-aminopropyltrimethoxysilane hydrochloride, 3-ureidopropyltriethoxysilane, 3-chloropropyltrimethoxysilane, 3-mercaptopropylmethyldimethoxysilane, 3-mercaptopropyltrimethoxysilane, bis(triethoxysilylpropyl) tetrasulfide, 3-isocyanatopropyltriethoxysilane, tetramethoxysilane, tetraethoxysilane, methyltrimethoxysilane, methyltriethoxysilane, dimethyltriethoxysilane, phenyltriethoxysilane, hexamethyldisilazane, hexyltrimethoxysilane, and decyltrimethoxysilane.

Examples of useful titanium coupling agents include tetraisopropyl titanate, tetra(n-butyl) titanate, butyl titanate dimer, tetra(2-ethylhexyl) titanate, tetramethyl titanate, titanium acetylacetonate, titanium tetraacetylacetonate, titanium ethylacetoacetate, titanium octanediolate, titanium lactate, titanium triethanolaminate, and polyhydroxytitanium stearate.

Examples of useful zirconium coupling agents include zirconium n-propylate, zirconium n-butylate, zirconium tetraacetylacetonate, zirconium monoacetylacetonate, zirconium bisacetylacetonate, zirconium monoethylacetoacetate, zirconium acetylacetonate bisethylacetoacetate, zirconium acetate, and zirconium monostearate.

Examples of useful aluminum coupling agents include aluminum isopropylate, mono-sec-butoxyaluminum diisopropylate, aluminum sec-butylate, aluminum ethylate, ethylacetoacetatoaluminum diisopropylate, aluminum tris(ethylacetoacetate), alkylacetoacetatealuminum diisopropylates, aluminum monoacetylacetonate bis(ethylacetoacetate), aluminum tris(acetylacetonate), aluminum monoisopropoxymonooleoxyethylacetoacetate, cyclic aluminum oxide isopropylate, cyclic aluminum oxide octylate, and cyclic aluminum oxide stearate.

These coupling agents may be used either individually or in combination of two or more thereof. In using a silane coupling agent, the surface of the rare earth phosphate particles is coated with a silane compound. The silane compound preferably has a lipophilic group, e.g., a substituted or unsubstituted alkyl group. The alkyl group may be linear or branched. Whether linear or branched, the alkyl group preferably has 1 to 20 carbon atoms for providing good affinity to resins. Examples of the substituent of the substituted alkyl group include amino, vinyl, epoxy, styryl, methacryl, acryl, ureido, mercapto, sulfide, and isocyanate groups. The amount of the silane compound coating the rare earth phosphate particles is preferably 0.01 to 200 mass%, more preferably 0.1 to 100 mass%, in view of good affinity to resins.

The light-diffusing sheet of the present invention can be produced by, for example, mixing the light-scattering particles comprising the rare earth phosphate particles into a molten resin or attaching the light-scattering particles to resin pellets. The pellets are molded into sheet forms by known techniques, such as blown film extrusion or T-die extrusion. In the preparation of the pellets, a component other than the light-scattering particles and the resin may be incorporated into the resin pellets to produce a light-diffusing sheet containing the component. Examples of the other components include additives capable of improving various characteristics of the light-diffusing sheet, such as a silicone oil dispersant that helps the light-scattering particles to be highly dispersed.

A light-diffusing article comprising a substrate and a light-diffusing layer (coating layer), which is one embodiment of the light diffuser, provided on the substrate may be produced by, for example, preparing a coating composition by mixing an organic solvent, a binder resin, and the light-scattering particles and applying the coating composition to the substrate using a roller, a spray gun, and the like.

The light-diffusing sheet of the present invention produced by any of the above described methods is suited for use as a transparent screen of displays, lighting members, window members, illumination members, light guide panel members, projector screens, head-up displays, and the like; and agricultural materials, such as a greenhouse. The molded resin having the light-scattering particles dispersed therein may have a shape other than the sheet form for use as a light diffuser.

A suitable method for producing preferred rare earth phosphate particles to be used in the light-diffusing sheet (light diffuser) of the present invention will then be described. The rare earth phosphate particles produced by this method are advantageous in that reduction of transparency of the resulting light-diffusing sheet (light diffuser) hardly occurs even when they are added in a large quantity.

The method first includes mixing an aqueous solution containing at least one rare earth element source and an aqueous solution containing a phosphate group to cause a phosphate of the rare earth element(s) to precipitate. For example, an aqueous solution containing a phosphate group is added to an aqueous solution containing at least one rare earth element source to precipitate a rare earth phosphate. In an example of the preferred method, the precipitate is dried by, for example, spray drying and fired to give rare earth phosphate particles of desired shape. When the step of forming a precipitate is carried out under heating, very highly crystalline rare earth phosphate particles can be obtained with a desired shape. Because water can remain in the rare earth phosphate particles, the particles are preferably heated to remove the water. The temperature of heating the aqueous solution containing a rare earth element source is preferably 50° to 100°C, more preferably 70° to 95°C. By allowing the reaction to occur while heating the system at a temperature in that range, rare earth phosphate particles having a desired $D_{50}$ value and a desired primary particle size are obtained. In order to produce highly crystalline rare earth phosphate particles, the firing is preferably conducted at a temperature ranging from 600°C to 1600°C. Rare earth phosphate particles having desired characteristics in terms of primary particle crystallinity, pore size distribution, average pore size, and chromaticity can be obtained through this step.

The aqueous solution containing a rare earth element source preferably has a rare earth element concentration of 0.01 to 1.5 mol/L, more preferably 0.01 to 1 mol/L, even more preferably 0.01 to 0.5 mol/L. It is preferred that the rare earth element be present in the aqueous solution in the form of trivalent ion or complex of the trivalent ion and one or more ligands. The aqueous solution containing a rare earth element source is prepared by dissolving a rare earth oxide (e.g., $Ln_2O_3$) in, e.g., a nitric acid aqueous solution.

The aqueous solution containing a phosphate group preferably has a total concentration of a phosphoric acid chemical species of 0.01 to 3 mol/L, more preferably 0.01 to 1 mol/L, even more preferably 0.01 to 0.5 mol/L. An alkali species may be added for pH adjustment. As an alkali species, basic compounds, such as ammonia, ammonium hydrogen carbonate, ammonium carbonate, sodium hydrogen carbonate, sodium carbonate, ethylamine, propylamine, sodium hydroxide, and potassium hydroxide, may be used.

In view of forming the precipitated product efficiently, the mixing ratio of the rare earth element source-containing aqueous solution and the phosphate radical-containing aqueous solution is preferably such that the phosphate ion to rare earth ion molar ratio is 0.5 to 10, more preferably 1 to 5.

The thus formed rare earth phosphate particles are separated from the liquid medium in a usual manner, followed by washing with water at least once. Washing is preferably continued until the conductivity of the washing filtrate decreases to, for example, 2000 μS/cm or lower.

## Examples

The present invention will now be illustrated in greater detail with reference to Examples, but it should be understood that the present invention is not construed as being limited thereto. Unless otherwise noted, all the percentages and parts are given by mass.

Example 1

A resin sheet containing light-scattering particles of yttrium phosphate was made in accordance with the following procedures.

Water weighing 600 g was put in a glass container 1, and 61.7 g of 60% nitric acid (purchased from Wako Pure Chemical Ind., Ltd.) and 18.8 g of $Y_2O_3$ (from Nippon Yttrium Co., Ltd.) were added thereto, followed by heating at 80 °C to prepare an aqueous solution. In another glass container 2 were put 600 g of water and 18.8 g of 85% phosphoric acid.

The contents of the glass container 2 was poured into the glass container 1, followed by aging for 1 hour. The precipitate thus formed was washed by decantation until the conductivity of the supernatant liquid decreased to 100 μS/cm or lower. After the washing, the solid was collected by filtration under reduced pressure, dried in the atmosphere at 120°C for 5 hours, and fired in the atmosphere at 800°C for 3 hours. The resulting light-scattering particles were evaluated for BET specific surface area, $D_{50}$, and $D_{99}$ in accordance with the methods described above. The results obtained are shown in Table 1 below.

Polycarbonate resin pellets (301-22, from Sumika Polycarbonate Ltd.) were mixed with 1%, relative to the total mass, of the light-scattering particles and 1%, relative to the total mass, of a silicone oil (KF96-50, from Shin-Etsu Chemical Co., Ltd.) thereby to affix the light-scattering particles to the surface of the resin pellets. The resulting resin pellets were molded using a T-die extruder (GT-20-A, from Research Lab. of Plastics Technology Co., Ltd.) to make a 100 μm-thick light-diffusing sheet.

Example 2

A light-diffusing sheet was made in the same manner as in Example 1, except that the light-scattering particles of yttrium phosphate were prepared in the same manner as in Example 1 except for changing the firing temperature to 1000°C.

Example 3

A light-diffusing sheet was made in the same manner as in Example 1, except that the light-scattering particles of yttrium phosphate were prepared in the same manner as in Example 1 except for changing the firing temperature to 1400°C.

Example 4

A resin sheet containing light-scattering particles of gadolinium phosphate was made in the same manner as in Example 1, except for using 30.2 g of $Ga_2O_3$ in place of $Y_2O_3$ in the preparation of the light-scattering particles.

Example 5

A resin sheet containing light-scattering particles of lanthanum phosphate was made in the same manner as in Example 1, except for using 27.1 g of $La_2O_3$ in place of $Y_2O_3$ in the preparation of the light-scattering particles.

Examples 6 to 10

A light-diffusing sheet was made in the same manner as in Examples 1 to 5, except for using an acrylic resin (Parapet EH, from Kuraray Co., Ltd.) in place of the polycarbonate resin. The proportion of the light-scattering particles in the total mass was the same as in Examples 1 to 5.

Examples 11 to 15

A light-diffusing sheet was made in the same manner as in Examples 1 to 5, except for using a polyethylene terephthalate resin (TRN-MTJ, from Teijin, Ltd.) in place of the polycarbonate resin. The proportion of the light-scattering particles in the total mass was the same as in Examples 1 to 5.

Comparative Example 1

A light-diffusing sheet was obtained in the same manner as in Example 1, except for changing the firing temperature to 400°C.

Comparative Example 2

A light-diffusing sheet was obtained in the same manner as in Example 1, except for using zirconium oxide having the physical properties shown in Table 1 as light-scattering particles.

Comparative Example 3

A light-diffusing sheet was obtained in the same manner as in Example 1, except for using titanium oxide having the physical properties shown in Table 1 as light-scattering particles.

Comparative Example 4

A light-diffusing sheet was made in the same manner as in Comparative Example 2, except for changing the proportion of the light-scattering particles to 0.2%.

Comparative Example 5

A light-diffusing sheet was made in the same manner as in Comparative Example 3, except for changing the proportion of the light-scattering particles to 0.002%.

Evaluation:

The light-scattering sheets obtained in Examples and Comparative Examples were evaluated in terms of light transmittance, light diffusing properties, and yellowing by the following methods. The results are shown in Table 1.

(1) Light-transmittance and light-diffusing properties

Haze (Hz) and parallel light transmittance (PT) of the sheet were determined using a haze meter (NDH2000, from Nippon Denshoku Ind., Co., Ltd.). Light-transmittance was rated on the basis of the PT according to the following scale. Light-diffusing properties were rated on the basis of the Hz according to the following scale.

Rating of light-transmittance:

E (Excellent): PT of 80% or higher.
G (Good): PT of from 60% to lower than 80%.
P (Poor): PT of lower than 60%.

Rating of light-diffusing properties:

G (Good): Hz of 5% or higher.
P (Poor): Hz of lower than 5%.

(2) Yellowing

The sheets of Examples and Comparative Examples were each visually evaluated by three persons and rated according to the following scale:

G (Good): White or very pale yellow.
P (Poor): Apparent yellowing (orange color) observed.

(3) Chromaticity

The reactivity between the light-scattering particles and the resin was evaluated as follows. In a metallic cup was put 1.5 g of the resin pellets used in each of Examples 1 to 5 and 12 and Comparative Examples 1 to 3. Over the resin pellets were sprinkled 0.02 g of the powder (light-scattering particles) used in the corresponding Examples and Comparative Examples, and the cup and the contents were maintained in a drier heated to 260°C for 2 hours. After cooling to room temperature, only the powder was taken out, and its chromaticity was measured using a spectrocolorimeter (e.g., CM-2600d, from Konica Minolta, Inc.) in accordance with JIS Z8729 "Color specification according to U*V*W* colorimetric system".

Table 1

| | Resin* | Light-Diffusing Sheet | | | | | | Performance of Light-Diffusing Sheet | | | | | Chromaticity of Light-Scatting Particles after Heating with Resin | | |
|---|---|---|---|---|---|---|---|---|---|---|---|---|---|---|---|
| | | Light-Scattering Particles | | | | | | Transmittance | | Light-Diffusing Properties | | Yellowing | | | |
| | | Composition | Surface Area/Unit Volume ($m^2/cm^3$) | BET Specific Surface Area ($m^2/g$) | $D_{50}$ ($\mu$m) | $D_{99}/D_{50}$ | | PT (%) | Rating | Hz (%) | Rating | | L* | a* | b* |
| Ex. 1 | PC | $YPO_4$ | 0.580 | 48 | 1.0 | 3.87 | | 84.5 | E | 8.2 | G | G | 75.9 | 2.3 | 6.2 |
| Ex. 2 | PC | $YPO_4$ | 0.121 | 10 | 1.5 | 3.35 | | 83.9 | E | 8.8 | G | G | 80.3 | 1.6 | 4.1 |
| Ex. 3 | PC | $YPO_4$ | 0.020 | 2 | 3.0 | 2.19 | | 75.7 | G | 17.7 | G | G | 95.9 | 0.3 | 3.2 |
| Ex. 4 | PC | $GdPO_4$ | 0.496 | 41 | 1.2 | 1.88 | | 78.3 | G | 14.9 | G | G | 85.1 | 1.3 | 3.8 |
| Ex. 5 | PC | $LaPO_4$ | 0.085 | 7 | 1.2 | 2.08 | | 86.0 | E | 6.5 | G | G | 88.7 | 0.9 | 3.5 |
| Ex. 6 | PA | $YPO_4$ | 0.580 | 48 | 1.0 | 3.87 | | 85.1 | E | 7.5 | G | G | - | - | - |
| Ex. 7 | PA | $YPO_4$ | 0.121 | 10 | 1.5 | 3.35 | | 84.3 | E | 8.4 | G | G | - | - | - |
| Ex. 8 | PA | $YPO_4$ | 0.020 | 2 | 3.0 | 2.19 | | 78.6 | G | 14.6 | G | G | - | - | - |
| Ex. 9 | PA | $GdPO_4$ | 0.496 | 41 | 1.2 | 1.88 | | 79.2 | G | 13.9 | G | G | - | - | - |
| Ex. 10 | PA | $LaPO_4$ | 0.085 | 7 | 1.2 | 2.08 | | 86.4 | E | 6.1 | G | G | - | - | - |
| Ex. 11 | PET | $YPO_4$ | 0.580 | 48 | 1.0 | 3.87 | | 81.3 | E | 11.6 | G | G | - | - | - |
| Ex. 12 | PET | $YPO_4$ | 0.121 | 10 | 1.5 | 3.35 | | 80.1 | E | 12.9 | G | G | 80.1 | 1.8 | 4.7 |
| Ex. 13 | PET | $YPO_4$ | 0.020 | 2 | 3.0 | 2.19 | | 72.8 | G | 20.9 | G | G | - | - | - |
| Ex. 14 | PET | $GdPO_4$ | 0.496 | 41 | 1.2 | 1.88 | | 76.9 | G | 16.4 | G | G | - | - | - |
| Ex. 15 | PET | $LaPO_4$ | 0.085 | 7 | 1.2 | 2.08 | | 83.5 | E | 9.2 | G | G | - | - | - |
| Comp. Ex. 1 | PC | $YPO_4$ | 1.186 | 98 | 1.1 | 3.14 | | 87.9 | E | 4.5 | P | P | 62.4 | 5.83 | 15.88 |
| Comp. Ex. 2 | PC | $ZrO_2$ | 0.172 | 48 | 1.5 | 2.56 | | 32.0 | P | 65.2 | G | G | 95.2 | 0.3 | 4.2 |
| Comp. Ex. 3 | PC | $TiO_2$ | 0.120 | 10 | 0.3 | 6.72 | | 3.7 | P | 96.0 | G | P | 59.3 | 6.63 | 19.1 |
| Comp. Ex. 4 | PC | $ZrO_2$ | 0.034 | 48 | 1.5 | 2.56 | | 90.3 | E | 1.8 | P | G | - | - | - |

EP 3 581 974 A1

(continued)

| | Resin* | Light-Diffusing Sheet | | | | | | Performance of Light-Diffusing Sheet | | | | | Chromaticity of Light-Scatting Particles after Heating with Resin | | |
| | | Light-Scattering Particles | | | | | Transmittance | | Light-Diffusing Properties | | Yellowing | | | |
| | | Composition | Surface Area/ Unit Volume $(m^2/cm^3)$ | BET Specific Surface Area $(m^2/g)$ | $D_{50}$ $(\mu m)$ | $D_{99}/D_{50}$ | PT (%) | Rating | Hz (%) | Rating | | L* | a* | b* |
| Comp. Ex. 5 | PC | $TiO_2$ | 0.002 | 10 | 0.3 | 6.72 | 59.3 | P | 35.5 | G | P | - | - | - |
| * "PC" stands for polycarbonate. "PA" stands for acrylic resin. "PET" stands for polyethylene terephthalate. | | | | | | | | | | | | | | |

As is apparent from the results in Table 1, The light-diffusing sheets obtained in Examples have high light transparency, high light diffusing properties, and low yellowing properties.

In contrast, the light-diffusing sheet of Comparative Example 1, while having high light transparency, exhibits low light-diffusing properties and suffers yellowing. This is because, the inventors believe, the light-scattering particles have a high surface area per unit volume and therefore fail to prevent reduction in light-diffusing properties and coloration of the sheet, particularly yellowing. Although the light-diffusing sheets of Comparative Examples 2 and 4, which contain zirconium oxide particles as light-scattering particles, have low yellowing properties, are not able to satisfy both the requirements of light-transparency and light-diffusing properties. The light-diffusing sheets of Comparative Examples 3 and 5, which contain titanium oxide particles as light-scattering properties, not only suffer yellowing but are not able to satisfy both the requirements of light-transparency and light-diffusing properties. Thus, the light-diffusing sheets of the present invention prove useful as a transparent screen.

Industrial Applicability

The present invention provides a light-diffuser, including a light-diffusing sheet, that exhibits higher light-diffusing properties than are conventionally achievable.

**Claims**

1. A light-diffusing sheet comprising a molded resin and light-scattering particles dispersed in the molded resin, the light-scattering particles being rare earth phosphate particles, and the light-scattering particles present per unit volume of the molded resin having a surface area of 0.600 m$^2$/cm$^3$ or less.

2. The light-diffusing sheet according to claim 1, wherein the light-scattering particles have a volume cumulative particle size $D_{50}$ at 50% in the volume-based cumulative particle size distribution of 0.1 to 20 $\mu$m as measured by the laser diffraction method.

3. The light-diffusing sheet according to claim 1 or 2, wherein the light-scattering particles have a $D_{99}/D_{50}$ value of 10 or less, wherein $D_{50}$ is a volume cumulative particle size at 50% in the volume-based cumulative particle size distribution as measured by the laser diffraction method, and $D_{99}$ is the volume cumulative particle size at 99% in the volume-based cumulative particle size distribution as measured by the laser diffraction method.

4. The light-diffusing sheet according to any one of claims 1 to 3, wherein the light-scattering particles have a BET specific surface area of 0.1 to 50 m$^2$/g.

5. The light-diffusing sheet according to any one of claims 1 to 4, wherein the light-scattering particles have a whiteness (L*) of 75 to 100, a redness (a*) of 0 to 5.0, and a yellowness (b*) of 0 to 10.

6. A light diffuser comprising a molded resin and light-scattering particles dispersed in the molded resin, the light-scattering particles being rare earth phosphate particles, and the light-scattering particles present per unit volume of the molded resin having a surface area of 0.600 m$^2$/cm$^3$ or less.

## INTERNATIONAL SEARCH REPORT

| International application No. |
| --- |
| PCT/JP2018/001497 |

**A. CLASSIFICATION OF SUBJECT MATTER**
Int.Cl. G02B5/02(2006.01)i, G02B1/04(2006.01)i

According to International Patent Classification (IPC) or to both national classification and IPC

**B. FIELDS SEARCHED**

Minimum documentation searched (classification system followed by classification symbols)
Int.Cl. G02B5/02, G02B1/04

| Documentation searched other than minimum documentation to the extent that such documents are included in the fields searched | |
| --- | --- |
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2009-544783 A (RHODIA OPERATIONS) 17 December 2009, paragraphs [0015], [0019], [0043]-[0047], [0053]-[0055], [0087]-[0091], [0126], [0134], [0147]-[0233] & US 2010/0051868 A1 paragraphs [0018]-[0019], [0023], [0054]-[0061], [0066]-[0068], [0102]-[0118], [0157], [0166], [0191]-[0271] & US 2014/0048743 A1 & WO 2008/012266 A1 & EP 2052053 A1 & FR 2904323 A & CA 2659033 A & KR 10-2009-0034914 A & CN 101490211 A & MX 2009000785 A & TW 200813193 A & BR 152110715641 A & JP 2014-15617 A | 1-4, 6<br>5 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 20 March 2018 (20.03.2018) | 03 April 2018 (03.04.2018) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
| --- | --- |

Form PCT/ISA/210 (second sheet) (January 2015)

**INTERNATIONAL SEARCH REPORT**

International application No.

PCT/JP2018/001497

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2011-520751 A (RHODIA OPERATIONS) 21 July 2011, paragraphs [0019]-[0022], [0100] & US 2011/0133124 A1 paragraphs [0020]-[0023], [0112] & WO 2009/138426 A1 & EP 2303985 A1 & FR 2931143 A & CA 2723028 A & KR 10-2010-0134751 A & CN 102027093 A & CN 105271155 A | 5 |
| Y | JP 4-338105 A (RHONE POULENC CHIMIE) 25 November 1992, paragraphs [0012], [0036]-[0037] & US 5340556 A column 5, lines 34-44, column 6, lines 32-46 & US 5562889 A & EP 498689 A1 & DE 69222200 C & FR 2672281 A & AT 158336 E & HU 63815 A & AT 158336 T & CA 2060579 A & HU 9200320 DO | 5 |
| A | WO 2016/020337 A1 (RHODIA OPERATIONS) 11 February 2016, whole document & JP 2017-525801 A & US 2017/0226415 A1 & EP 3177692 A1 & CN 106574176 A & KR 10-2017-0039178 A & TW 201619352 A | 1-6 |

Form PCT/ISA/210 (continuation of second sheet) (January 2015)

**EP 3 581 974 A1**

## REFERENCES CITED IN THE DESCRIPTION

**Patent documents cited in the description**

- US 20040238801 A1